# EUROPÄISCHE PATENTANMELDUNG

(11) **EP 1 106 272 A1**
(43) Veröffentlichungstag der Anmeldung: **13.06.2001**
(21) Anmeldenummer: 00126057.9
(22) Anmeldetag: 29.11.2000
(51) Int. Cl.: B21B 31/10, B21B 31/30, F16D 1/05, F16C 13/00

(54) **Walze, insbesondere einer Rohrschweissanlage**

(30) Priorität: 07.12.1999 DE 19958847
(71) Anmelder: SMS Demag AG, 40237 Düsseldorf (DE)
(72) Erfinder: Heimann, Bernhard, Dr., 47447 Moers (DE)
(74) Vertreter: Valentin, Ekkehard, Dipl.-Ing.

(57) **Zusammenfassung**

Bei einer Walze (1), insbesondere einer Rohrschweißmaschine, deren Walzenkörper (5) auf einer Walzenwelle (2) zwischen Lagereinheiten (3, 4) auf einer mittels eines an einem Walzenwellenende in einem Trägerelement (10) vorgesehenen hydraulischen Stellantriebs (11) axial verschiebbaren Konushülse (7) angeordnet ist, wird der Aufwand zum Wechseln des Walzenkörpers (5) verringert, wenn der Stellantrieb (11) als doppelt wirkender hydraulischer Ringkolben (12) ausgebildet ist, der mit einer die Lagereinheit (4) tragenden Lagerhülse (16) direkt und mit der Konushülse (7) mittelbar verbunden ist.

## Beschreibung

Die Erfindung betrifft eine Walze, insbesondere einer Rohrschweißanlage, deren Walzenkörper auf einer Walzenwelle zwischen Lagereinheiten auf einer mittels eines an einem Walzenwellenende in einem Trägerelement vorgesehenen hydraulischen Stellantriebs axial verschiebbaren Konushülse angeordnet ist.

Zur Befestigung eines Walzringes aus Hartmetall mit entsprechenden Walzkalibern zur Herstellen von Profildrähten oder stangenförmigen Profilen ist es durch die EP 0 342 179 B1 bekanntgeworden, den Walzring auf dem frei vorragenden Ende einer fliegend gelagerten Walzenwelle zu befestigen. Der Walzring wird zwischen zwei Druckringen axial eingespannt, von denen sich einer an der Walzenwelle und der andere an einer Spanneinrichtung axial abstützt. Die Spanneinrichtung ist in einem auf der Walzenwelle befestigten Träger angeordnet und mit einem Stelltrieb versehen, der mehrere axiale Druckstößel aufweist, mit denen sich eine im Bereich der konischen Walzenwelle angeordnete Keilhülse axial verstellen läßt. Neben den Hydraulikstößeln zum Einpressen der Keilhülse sind weitere hydraulische Stößel in dem Träger vorgesehen, mit denen sich der Walzenkörper in die Endstellung pressen läßt. Bei dieser Ausführung liegt allerdings der große Nachteil vor, daß zum Lösen der konischen Hülse bzw. Keilhülse eine separate, externe Vorrichtung erforderlich ist.

Das Zentrieren eines Walzenkörpers auf einer Walzenwelle mit einer konischen Hülse führt in bekannter Weise zu einer hohen Rundlaufgenauigkeit. Hierdurch kann bei der Herstellung von Rohren das von einer Rohrschweißanlage produzierte Rohr bereits solch enge Toleranzen aufweisen, daß es nicht mehr gezogen werden muß, wodurch sich ein zusätzlicher Arbeitsgang einsparen läßt. Diese präzise Herstellung mit engsten Toleranzen setzt eine spielfreie Verbindung zwischen der Walzenwelle und den Walzenkörper voraus, um die präzise Rundlaufgenauigkeit der Walze zu gewährleisten. Hierbei hat sich gezeigt, daß mit den bekannten Montage- bzw. Befestigungsvorrichtungen, z.B. auch der gemäß EP 0 342 179 B1, kein variabler Ein- und Ausbau möglich ist.

Der Erfindung liegt daher die Aufgabe zugrunde, eine Walze der eingangs genannten Art zu schaffen, bei der der Aufwand zum Wechseln des Walzenkörpers verringert wird.

Diese Aufgabe wird erfindungsgemäß dadurch gelöst, daß der Stellantrieb als doppelt wirkender hydraulischer Ringkolben ausgebildet ist, der mit einer die Lagereinheit tragenden Lagerhülse direkt und mit der Konushülse mittelbar verbunden ist. Es läßt sich damit erreichen, daß mit ein- und derselben Hydraulikeinheit sowohl ein Spannen als auch ein Lösen der Konushülse und damit des Walzenkörpers zum Abziehen von der Walzenwelle möglich ist. Das verringert nicht nur den Wechselaufwand, sondern auch die für einen Wechsel des Walzenkörpers, der zur weiteren Unterstützung der spielfreien Endlage zusätzlich über eine Paßfeder mit der Konushülse verbunden sein kann, benötigte Zeit.

Eine Ausgestaltung der Erfindung sieht vor, daß der Ringkolben mit einem Innengewinde auf ein komplementäres Außengewinde der Lagerhülse geschraubt ist. Damit liegt eine auch einfach wieder zu lösende Verbindung zwischen dem Ringkolben und der Lagerhülse vor.

Nach einer bevorzugten Ausführung der Erfindung ist ein Vorkragende der Konushülse mit einer Umfangsnut versehen, in die ein in der Lagereinheit stimseitig angeordneter Ring mit einem ersten, vorderen Innenkragen eingreift, während ein zweiter, hinterer Innenkragen des Ringes ein Schulterstück der Lagerhülse hintergreift. Dieser gewährleistet somit eine formschlüssige Ankopplung der Lagerhülse an die Konushülse und überträgt, je nach Wirkrichtung des doppelt wirkenden Stellantriebs, entweder die Löse- oder die Aufpreßkraft auf den Konuskeil.

Wenn in der dem Walzenkörper zugewandten Stirnseite des Rings und gegenüber dieser vorspringend vorteilhaft ein elastischer Einsatz angeordnet ist, läßt sich beim Aufpressen des Walzenkörpers bis zu dessen Anlage an einem gegenüberliegenden Festanschlag ein aus den Verformeigenschaften des elastomeren Einsatzes herrührendes, optimiertes Verspannen und Aufpressen erreichen.

Nach einem weiteren Vorschlag der Erfindung ist das Stellantrieb-Trägerelement auf einer in das freie Walzenwellenende eingeschraubten Spannschraube angeordnet. Um den gesamten Walzeneinbau nach dem Lösen der Konushülse von der Walzenwelle komplett abzuziehen, braucht somit nur die Spannschraube aus der Walzenwelle herausgeschraubt zu werden.

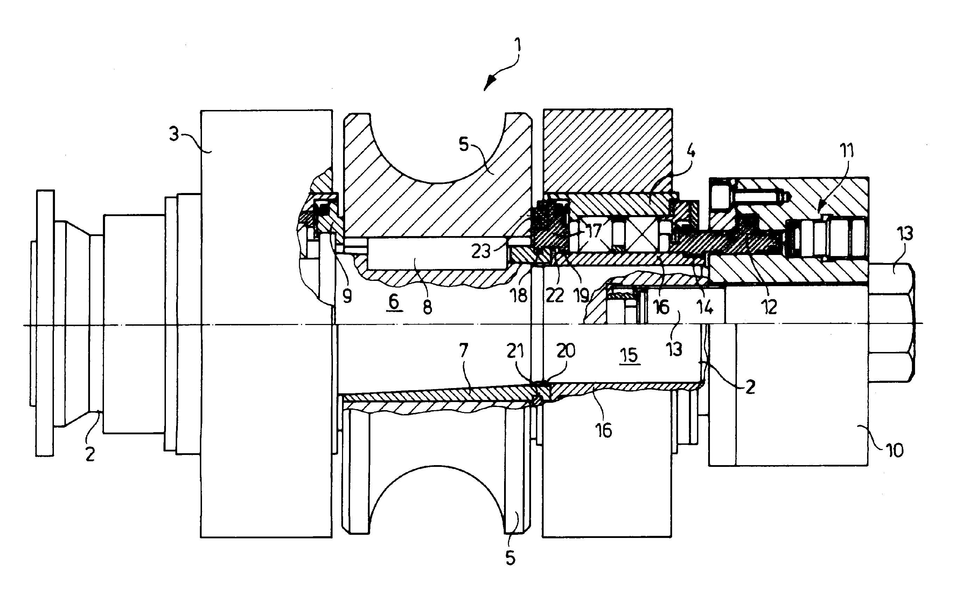

Weitere Einzelheiten und Vorteile der Erfindung ergeben sich aus den Ansprüchen und der nachfolgenden Beschreibung eines in der einzigen Zeichnung dargestellten Ausführungsbeispiels der Erfindung.

Eine mit ihren sämtlichen Einbauten insgesamt als Walze 1 bezeichnete Walzeneinbau-Anordnung weist eine Walzenwelle 2 auf, die in zwei Lagereinheiten 3, 4 gelagert ist. Diese schließen zwischen sich einen Walzenkörper 5 ein, der auf einem konischen Walzenwellenabschnitt 6 mittels einer Konushülse 7 und einer zusätzlichen Paßfeder 8 spielfrei angeordnet ist.

Zum spielfreien Einbausitz wird der Walzenkörper 5 durch axiales Verschieben der Konushülse 7 gegen einen an der Lagereinheit 3 angeordneten Festanschlag 9 verpreßt bzw. -spannt. Hierzu ist in einem Trägerelement 10 ein hydraulischer Stellantrieb mit einem doppelt wirkenden hydraulischen Ringkolben 12 angeordnet. Das Trägerelement 10 lagert auf einer von vorne, d.h. vom freien Ende her in die Walzenwelle 2 eingeschraubten Spannschraube 13. Der Ringkolben 12 ist über eine Schraubverbindung 14 (Innengewinde/Außengewinde) mit einer auf einem zylindrischen Endabschnitt 15 der Walzenwelle 2 angeordneten, die Lagereinheit 4 aufnehmenden Lagerhülse 16 verbunden. Diese ist ihrerseits über einen an der dem Walzenkörper 5 zugewandten Stirnseite in der Lagereinheit 4 vorgesehenen Ring 17 formschlüssig an die Konushülse 7 angekoppelt. Der Ring 17 ist dazu mit einem vorderen Innenkragen 18 und einem hinteren Innenkragen 19 ausgebildet, wobei der vordere Innenkragen 18 in eine in einem Vorkragende 20 der Konushülse 7 vorgesehene Umfangsnut 21 eingreift, während der hintere Innenkragen 19 ein Schulterstück 22 der Lagerhülse 16 hintergreift, so daß der Konuskeil 7 und die Lagerhülse 16 fest umklammert sind. Zum Walzenkörper 5 hin vorspringend ist in dem Ring 17 ein elastischer Einsatz 23 angeordnet, der die Preßkraft auf den Walzenkörper 5 überträgt.

Die festgelegte Einbaulage des Walzenkörpers 5 ist in der Figur gezeigt. Der mit Preßkraft von einer nicht dargestellten Druckmittelquelle beaufschlagte Ringkolben 12 des Stellantriebes 11 hat über die Schraubverbindung 14 die Lagerhülse 16 und damit aufgrund der Kopplung über den Ring 17 in gleicher Weise die Konushülse 7 axial bis zur Anlage des Walzenkörpers 5 an dem gegenüberliegenden Festanschlag 19 verschoben. Der Walzenkörper 5 ist somit zwischen dem Festanschlag 9 und dem Ring 7 bzw. dem darin vorgesehenen elastischen Einsatz 23 fest verspannt. Zum Lösen wird der doppelt wirkende Hydraulik- bzw. Ringkolben 12 durch entsprechende Umsteuerung der Hydraulikversorgung in nicht gezeigter Weise von der anderen Seite her beaufschlagt. Dies bewirkt, daß mit demselben Stellantrieb 11 die Konushülse 7 von dem konischen Walzenwellenabschnitt 6 zurückgezogen und der elastische Einsatz 23 gelöst wird. Wenn nun die Spannschraube 13 aus der Walzenwelle 2 herausgeschraubt wird, läßt sich der gesamte Walzeneinbau von der Walzenwelle abziehen.

## Patentansprüche

1. Walze, insbesondere einer Rohrschweißmaschine, deren Walzenkörper auf einer Walzenwelle zwischen Lagereinheiten auf einer mittels eines an einem Walzenwellenende in einem Trägerelement vorgesehenen hydraulischen Stellantriebs axial verschiebbaren Konushülse angeordnet ist,
**dadurch gekennzeichnet,**
daß der Stellantrieb (11) als doppelt wirkender hydraulischer Ringkolben (12) ausgebildet ist, der mit einer die Lagereinheit (4) tragenden Lagerhülse (16) direkt und mit der Konushülse (7) mittelbar verbunden ist.

2. Walze nach Anspruch 1,
**dadurch gekennzeichnet,**
daß der Ringkolben (12) mit einem Innengewinde auf ein komplementäres Außengewinde der Lagerhülse (16) geschraubt ist.

3. Walze nach Anspruch 1 oder 2,
**dadurch gekennzeichnet,**
daß ein Vorkragende (20) der Konushülse (7) mit einer Umfangsnut (21) versehen ist, in die ein in der Lagereinheit (4) stirnseitig angeordneter Ring (17) mit einem ersten, vorderen Innenkragen (18) eingreift, während ein zweiter, hinterer Innenkragen (19) des Ringes (17) ein Schulterstück (22) der Lagerhülse (16) hintergreift.

4. Walze nach einem der Ansprüche 1 bis 3,
**gekennzeichnet durch**
einen in der dem Walzenkörper (5) zugewandten Stirnseite des Ringes (17) und gegenüber dieser vorspringend angeordneten, elastischen Einsatz (23).

5. Walze nach einem der Ansprüche 1 bis 4,
**dadurch gekennzeichnet,**
daß das Stellantrieb-Trägerelement (10) auf einer in das freie Walzenwellenende eingeschraubten Spannschraube (13) angeordnet ist.
